# EUROPÄISCHE PATENTSCHRIFT

(11) **EP 0 941 460 B1**
(45) Veröffentlichungstag und Bekanntmachung des Hinweises auf die Patenterteilung: **10.05.2000**
(21) Anmeldenummer: 97951090.6
(22) Anmeldetag: 24.11.1997
(51) Int. Cl.: G01L 9/00

(54) **VERFAHREN ZUR HERSTELLUNG VON MIKROMECHANISCHEN SENSOREN**
PROCESS FOR PRODUCING MICROMECHANICAL SENSORS
PROCEDE DE FABRICATION DE CAPTEURS MICROMECANIQUES

(30) Priorität: 28.11.1996 DE 19649367
(43) Veröffentlichungstag der Anmeldung: 15.09.1999
(73) Patentinhaber: SIEMENS AKTIENGESELLSCHAFT, 80333 München (DE)
(72) Erfinder: SCHEITER, Thomas, D-82041 Oberhaching (DE); NÄHER, Ulrich, D-80803 München (DE); HIEROLD, Christofer, D-81739 München (DE)
(86) Internationale Anmeldenummer: DE9702751
(87) Internationale Veröffentlichungsnummer: WO9823935

(56) Entgegenhaltungen:
- EP-A- 0 714 017
- EP-A- 0 732 594
- DE-A- 4 223 455
- US-A- 5 095 401
- PATENT ABSTRACTS OF JAPAN vol. 013, no. 192 (E-753), 9.Mai 1989 & JP 01 013773 A (NISSAN MOTOR CO LTD), 18.Januar 1989,

## Beschreibung

Die vorliegende Erfindung betrifft ein Verfahren zur Herstellung von mikromechanischen Sensoren, insbesondere von Absolutdrucksensoren, die vorzugsweise im Rahmen eines CMOS-Prozesses hergestellt werden und als mikromechanisches Bauelement auf einem Substrat angeordnet sind.

Zur Messung von Absolutdruck werden kapazitive Drucksensoren eingesetzt. Eine geschlossene Kammer mit einem Bezugsdruck ist durch eine elastische Membran abgeschlossen, die einem äußeren Druck ausgesetzt ist. Die elektrisch leitende Membran bildet mit der gegenüberliegenden Seite dieser Kammer einen Plattenkondensator. Aufgrund der Druckdifferenz zwischen dem äußeren Druck und dem inneren Bezugsdruck wird die Membran verformt. Durch den geänderten Abstand zwischen der Membran und der als Gegenelektrode wirkenden Kammerrückseite, die z. B. durch einen in Halbleitermaterial hergestellten dotierten Bereich gebildet sein kann, ändert sich die Kapazität dieses Kondensators. Aus dieser Kapazitätsänderung läßt sich der äußere Druck bestimmen. Eine derartige Anordnung ist z. B. in der US 5,095,401 beschrieben. Ein Problem bei der Herstellung derartiger Drucksensoren im Rahmen eines CMOS-Prozesses ergibt sich dadurch, daß nach dem Ausätzen des unter der Membran vorgesehenen Hohlraumes dieser Hohlraum verschlossen werden muß und die dafür vorgesehene Verschlußschicht bei einem Druck von mehr als 10 mbar aufgebracht wird. Das in dem Hohlraum eingeschlossene Gas besitzt daher einen zu hohen Druck, der die Empfindlichkeit und Temperaturstabilität des Sensors negativ beeinflußt. Das relativ dichte Gas in dem Hohlraum heizt sich bei vorhandenen Membranschwingungen zu stark auf und verfälscht dadurch das Meßergebnis. Eine entsprechende Schwierigkeit tritt auf bei verkapselten Beschleunigungssensoren, bei denen ein bewegliches mikromechanisches Masseteil in einem Hohlraum, der nach außen verschlossen ist, angeordnet ist.

Aufgabe der vorliegenden Erfindung ist es, ein im Rahmen eines CMOS-Prozesses durchführbares Herstellungsverfahren für einen mikromechanischen Sensor anzugeben, bei dem das vorgenannte Problem nicht auftritt.

Diese Aufgabe wird mit dem Verfahren mit den Merkmalen des Anspruches 1 gelöst. Weitere Ausgestaltungen ergeben sich aus den abhängigen Ansprüchen.

Bei dem erfindungsgemäßen Verfahren wird der Hohlraum zunächst wie vorgesehen mit der Verschlußschicht verschlossen. Der Hohlraum kann z. B. durch Ätzöffnungen, die in der Membranschicht eines Absolutdrucksensors bzw. in der Verkapselungsschicht eines Beschleunigungssensors hergestellt worden sind, ausgeätzt werden. Als Verschlußschicht kommt die als Passivierung und Planarisierung für die CMOS-Bauelemente vorgesehene Schicht aus BPSG (Borphosphorsilikatglas) in Frage. Nach dem Verschließen befindet sich in dem Hohlraum ein Gas mit einem Druck von mehr als 2000 Nm⁻² bei Raumtemperatur. Erfindungsgemäß wird in einem späteren Verfahrensschritt der Hohlraum wieder geöffnet, was vorzugsweise dadurch geschieht, daß an einer Stelle die Verschlußschicht entfernt und ein darunter befindliches, in der Regel durch die Verschlußschicht ganz oder teilweise verschlossenes Ätzloch in der Membran oder einem Teil der Membranschicht bzw. in der Verkapselungsschicht wieder geöffnet wird. In einem Verfahrensschritt, der unter geringem Druck (weniger als 2000 Nm⁻²) erfolgt, wird diese Öffnung erneut verschlossen, so daß anschließend in dem Hohlraum ein Vakuum oder ein Gas unter niedrigem Druck (höchstens 2000 Nm⁻² oder besser weniger als 1000 Nm⁻²) eingeschlossen ist. Dazu wird ein Material verwendet, das bei niedrigerem Druck abgeschieden wird als das Material der Verschlußschicht.

Es folgt eine genauere Beschreibung eines Ausführungsbeispiels des erfindungsgemäßen Verfahrens anhand der Figuren 1 bis 4.
- Figuren 1 bis 3: zeigen Zwischenprodukte des Drucksensors bei Ausführung verschiedener Ausführungsformen des Verfahrens.
- Figur 4: zeigt die Anordnung der Ätzlöcher in der Membranschicht bei der Ausführungsform von Figur 3.

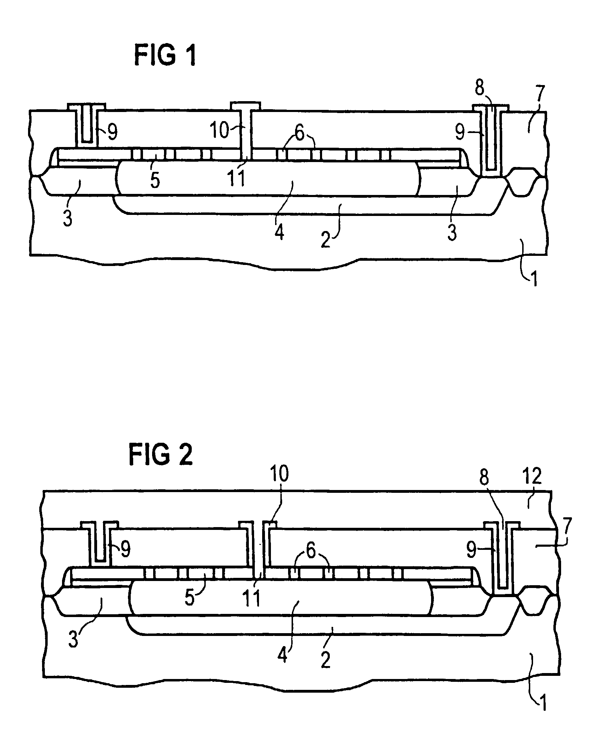

Das erfindungsgemäße Herstellungsverfahren unterscheidet sich zunächst nicht von einem herkömmlichen VLSI-Prozeß, z. B. einem CMOS-Prozeß, mit dem auch mikromechanische Sensoren hergestellt werden. Zur Herstellung eines Absolutdrucksensors wird auf einem Substrat 1 (s. Figur 1), das z. B. Silizium ist, mittels lokaler Oxidation (LOCOS) eine Hilfsschicht 3 über einem dotierten Bereich 2 hergestellt. Auf die Hilfsschicht 3 wird vorzugsweise eine dünne Oxidschicht, z. B. TEOS (Tetraethylorthosilikat) und darauf die für die Membran vorgesehene Membranschicht 5 aufgebracht. In der Membranschicht werden Ätzlöcher 6 ausgeätzt. Unter Verwendung dieser Ätzlöcher wird durch ein geeignetes Ätzmittel, das bei einer Hilfsschicht aus Oxid z. B. HF in wäßriger Lösung sein kann, der Hohlraum 4 ausgeätzt. Eine anschließende ganzflächige Passivierung, die auch für elektronische Bauelemente, die auf dem Substrat hergestellt werden, vorgesehen ist, wird danach z. B. aus BPSG aufgebracht. In dieser Passivierungsschicht 7 werden dann Kontaktlöcher 8 ausgeätzt.

Das erfindungsgemäße Verfahren unterscheidet sich von herkömmlichen Verfahrensabläufen dadurch, daß in diesem Verfahrensschritt der Kontaktlochätzung auch mindestens eine entsprechende Öffnung über einer von der Passivierungsschicht 7 verschlossenen Ätzöffnung 6 in der Membranschicht 5 hergestellt wird. Gleichzeitig wird das betreffende Ätzloch 11 geöffnet. Vorzugsweise erfolgt anschließend ein Sputtern (Auf stäuben) von Metall, das als Füllung der Kontaktlöcher und/oder als erste Metallage für elektrischen Anschluß vorgesehen ist. Dieser Verfahrensschritt erfolgt typischerweise bei einem Druck von etwa 3 mTorr, etwa 0,4 N/m² und bei einer Temperatur von etwa 150°C. Der sich in dem Hohlraum 4 ergebende Innendruck bleibt dort erhalten, falls mit dem Sputtern des Metalles die spezielle Ätzöffnung 11 in der Membran, durch die der Hohlraum 4 geöffnet wurde, verschlossen wird. Es ergibt sich dann die Struktur, die in Figur 1 eingezeichnet ist, mit einem durch eine Kontaktlochfüllung 10 wieder verschlossenen und abgedichteten Hohlraum 4 und Kontaktlochfüllungen 9 für elektrischen Anschluß der leitfähig ausgebildeten Membranschicht 5 und des dotierten Bereiches 2. Die Öffnung in der Passivierungsschicht 7 über der Ätzöffnung 11 ist bei dieser Ausführungsform des Verfahrens mit geringerem Durchmesser herzustellen als die übrigen Kontaktlöcher 8. Der Durchmesser dieser speziellen Öffnung in der Passivierungsschicht 7 kann insbesondere kleiner sein als der Durchmesser der wieder geöffneten Ätzöffnung 11. In der Figur sind beide Abmessungen der Einfachheit halber gleich groß eingezeichnet. Bei Verwendung bestimmter Metalle muß die Öffnung über der Ätzöffnung 11 sehr klein hergestellt werden, damit es gelingt, mit dem Metall den Hohlraum 4 wieder zu verschließen. Bei Metallen mit sehr guter Kantenbedeckung, wie z. B. Aluminium, muß das betreffende Kontaktloch bei einer in dem Prozeß üblicherweise eingesetzten Metallisierungsdicke von z. B. 800 nm deutlich kleiner hergestellt werden als die Ätzlöcher 6 und die Kontaktlöcher 8. Es kann dann vorkommen, daß beim Ätzen dieses Loches mit sehr kleinem Durchmesser der Hohlraum 4 nicht geöffnet wird. Es besteht daher das Risiko, daß bei dieser Ausführungsform des Verfahrens das gewünschte Ergebnis nicht erzielt wird.

Als Alternative zu dem zuvor beschriebenen Ausführungsbeispiel kann entsprechend Figur 2 über einer speziellen Ätzöffnung 11, durch die der Hohlraum 4 wieder nach außen zugänglich gemacht werden soll, ein großes Kontaktloch in der Passivierungsschicht 7 geöffnet wird. Entsprechend dem in Figur 2 gezeigten Querschnitt verschließt die in diese Öffnung gesputterte Metallschicht 10 die Ätzöffnung 11 nicht. Der Hohlraum 4 bleibt also zunächst nach außen offen. Nach der Strukturierung des aufgesputterten Metalles erfolgt eine Abscheidung weiterer Schichten, die als Zwischendielektrikum (IMOX) zwischen den verschiedenen Metallisierungsebenen vorgesehen sind. Die erste dieser Oxidschichten 12 wird ganzflächig aufgebracht und verschließt die Ätzöffnung 11 und damit den Hohlraum. Ein typischer Druck bei diesem Verfahrensschritt ist etwa 2,95 Torr, etwa 400 N/m² bei ca. 300°C. Der sich in dem Hohlraum 4 nach dem Verschließen ergebende Innendruck ist bei Zimmertemperatur etwa halb so groß. Bei beiden Varianten des erfindungsgemäßen Verfahrens ist der Druck im Hohlraum nach dem Wiederverschließen niedriger als 2000 N/m². Mit der ersten beschriebenen Ausführungsform kann der Druck im Hohlraum sogar auf etwa 0,3 N/m² reduziert werden.

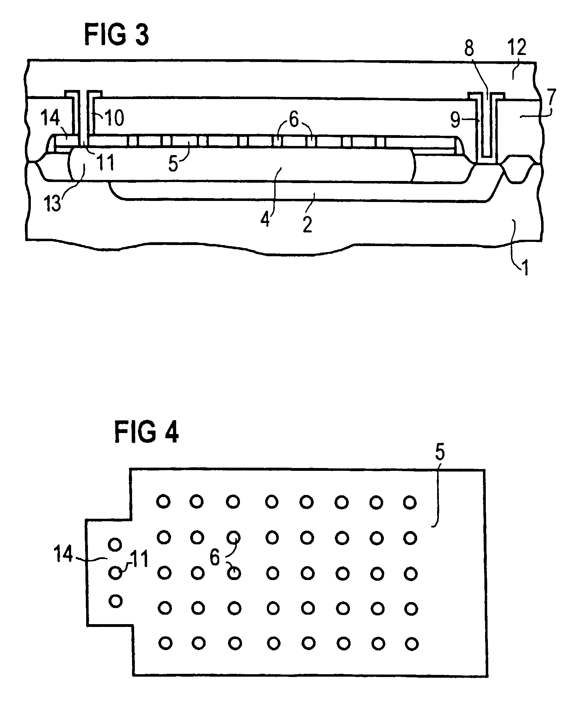

Die Ausführungsform entsprechend Figur 3 sieht vor, als wieder zu öffnende Ätzöffnung 11 eine Ätzöffnung außerhalb des für die Membran vorgesehenen Anteils der Membranschicht vorzusehen. Die Anordnung der Ätzöffnungen 6 in der Membranschicht 5 kann z. B. wie in Figur 4 in Aufsicht gezeigt vorgenommen werden. Der größere rechteckige Teil der Membranschicht bildet den für die Membran vorgesehenen Anteil, während ein seitlicher Ansatz 14 in diesem Beispiel drei spezielle Ätzlöcher 11 aufweist. Durch diese speziellen Ätzlöcher 11 hindurch wird ein darunter befindlicher seitlicher Kanal 13 des Hohlraumes 4 geätzt. Dann wird wie beschrieben die Passivierungsschicht 7 zum Verschließen der Membranschicht 5 aufgebracht. Mit den Kontaktlöchern 8 wird auch das Material der Passivierungsschicht 7 über den seitlichen Ätzlöchern 11 entfernt. Je nach Größe der geätzten Öffnung wird die Ätzöffnung 11 beim Sputtern der Metallschicht oder beim Aufbringen der Dielektrikumschicht 12 verschlossen. In Figur 3 ist eine Abmessung der Öffnung entsprechend dem Ausführungsbeispiel von Figur 2 eingezeichnet. Die Anordnung der zusätzlichen Ätzöffnungen 11 kann im Prinzip beliebig gewählt werden. Die Membranschicht kann auch vollständig rechteckig aufgebracht werden, seitliche Kanäle 13 in dem Hohlraum 4 für das nachträgliche Öffnen können auch auf mehreren Seiten hergestellt werden. Wesentlich ist dabei nur, daß die zusätzliche Ätzöffnung oder die zusätzlichen Ätzöffnungen außerhalb des für die Membran vorgesehenen Anteils der Membranschicht hergestellt werden. Das hat den Vorteil, daß die Membran selbst nach der Fertigstellung und dem Verschließen nicht wieder geöffnet zu werden braucht. Es kann damit eine größere Gleichmäßigkeit bei der Herstellung der Membran erzielt werden, und mögliche nachträgliche Beschädigungen der Membran werden vermieden.

Wesentliche Schritte des erfindungsgemäßen Verfahrens können auch bei der Herstellung eines verkapselten Beschleunigungssensors durchgeführt werden. Ein Beschleunigungssensor umfaßt ein mikromechanisches Masseteil, das an federnden Verstrebungen aufgehängt ist, so daß es bei Einwirkung einer Trägheitskraft ausgelenkt wird. Diese Bewegung wird detektiert und damit die die Trägheitskraft hervorrufende Beschleunigung gemessen. Zum Schutz des beweglichen Teiles werden derartige Beschleunigungssensoren vorzugsweise mit einer Abdeckschicht oder Verkapselungsschicht auf der von dem Substrat abgewandten Seite schützend abgedeckt. Diese Verkapselungsschicht wird vorzugsweise vor dem Freiätzen des beweglichen Teiles aufgebracht. In der Verkapselungsschicht werden Ätzöffnungen hergestellt, und durch diese Ätzöffnungen hindurch wird das das bewegliche Teil umgebende Material, das nur hilfsweise aufgebracht worden ist, entfernt. Auf diese Weise wird das bewegliche Teil freigeätzt, und es entsteht ein Hohlraum zwischen dem Substrat oder einer Halbleiterschicht und der Verkapselungsschicht. Die Ätzöffnungen in der Verkapselungsschicht werden anschließend mit einer Verschlußschicht verschlossen, so daß der geätzte Hohlraum nach außen verschlossen ist. Bei Integration des Verfahrens in einen CMOS-Prozeß kann die Verkapselungsschicht in einem relativ frühen Verfahrensschritt hergestellt werden und z. B. aus Polysilizium aufgebracht werden. Die Ätzöffnungen in dieser Schicht werden dann vorzugsweise mit der Planarisierungsschicht verschlossen, die für eine Planarisierung und Passivierung der die elektronischen Bauelemente enthaltenden Halbleiterschicht aufgebracht wird. Auch hier kommt vorrangig BPSG in Frage. Es ergibt sich daher auch hier das Problem, daß die Verschlußschicht bei sehr hohem Druck aufgebracht wird, der anschließend die Beweglichkeit des Masseteiles in dem Hohlraum beeinträchtigt. Entsprechend den bereits beschriebenen Ausführungsbeispielen des Verfahrens wird daher auch im Fall des Beschleunigungssensors mindestens eine der bereits verschlossenen Ätzöffnungen in der Verkapselungsschicht erneut geöffnet, was auch hier am besten zusammen mit der Kontaktlochätzung für elektrischen Anschluß geschehen kann. Dieses Ätzloch wird in einem nachfolgenden Schritt, der bei niedrigem Druck (weniger als 2000 Nm⁻² oder besser weniger als 1000 Nm⁻²) erfolgt, verschlossen. Die Ätzöffnung kann auch in diesem Beispiel je nach Größe der geätzten Öffnung und je nach Art des abgeschiedenen Materiales durch ein aufgebrachtes Metall, das als Kontaktlochfüllung vorgesehen ist, oder durch ein nachfolgend abgeschiedenes Dielektrikum verschlossen werden. Es ergibt sich im Prinzip für die erfindungswesentlichen Schritte derselbe Ablauf wie im Fall des Drucksensors. In dem in den Figuren 1 bis 3 eingezeichneten Hohlraum 4 befände sich bei einem Beschleunigungssensor das bewegliche Masseteil, und der Anschluß 9 der Schicht 5 kann entfallen. Die Schicht 5 bildet dann die Verkapselungsschicht. Der etwas größere Aufwand bei der Ausführungsform der Figur 3 mit zusätzlich seitlich angeordneten Ätzöffnungen ist bei der Herstellung eines verkapselten Beschleunigungssensors nicht erforderlich, da die Verkapselungsschicht keine so großen Anforderungen an gleichbleibende Herstellungsqualität stellt wie die Membranschicht eines Drucksensors. Das erfindungsgemäße Verfahren stellt daher auch bei der Herstellung verkapselter Beschleunigungssensoren eine wesentliche Verbesserung dar, wenn die Verschlußschicht unter hohem Prozeßdruck aufgebracht werden soll.

## Patentansprüche

1. Verfahren zur Herstellung eines mikromechanischen Sensors mit folgenden Schritten:
a)Auf eine für die Herstellung eines Hohlraumes (4) vorgesehene erste Schicht (3) oder Schichtfolge wird eine zweite Schicht (5) oder Schichtfolge aufgebracht;
b)mittels einer Maske werden Aussparungen (6) in einer für die nachfolgenden Schritte c) und d) bemessenen Größe in der zweiten Schicht (5) im Bereich der bezüglich der Schichtebenen senkrechten Projektion des herzustellenden Hohlraumes (4) hergestellt;
c)unter Verwendung dieser Aussparungen wird ein Hohlraum (4) in der ersten Schicht (3) oder Schichtfolge ausgeätzt;
d)es wird eine Verschlußschicht (7) auf die zweite Schicht (5) derart aufgebracht, daß die Aussparungen geschlossen werden, ohne den Hohlraum (4) aufzufüllen;
e)mindestens eine der Aussparungen (11) in der zweiten Schicht wird zumindest soweit wieder geöffnet, daß der Hohlraum geöffnet wird; und
f)diese Aussparung (11) wird mit einem Material, das von dem Material der Verschlußschicht (7) verschieden ist, erneut geschlossen, so daß der Hohlraum verschlossen ist.

2. Verfahren nach Anspruch 1, bei dem in Schritt d die Verschlußschicht (7) aus Borphosphorsilikatglas (BPSG) aufgebracht wird.

3. Verfahren nach Anspruch 1 oder 2, bei dem in Schritt f eine
Metallaufstäubung (sputter) und/oder eine Abscheidung eines Dielektrikums (12) erfolgt.

4. Verfahren nach einem der Ansprüche 1 bis 3, bei dem der Schritt f so ausgeführt wird, daß ein in dem Hohlraum (4) danach eingeschlossenes Gas unter einem Druck von höchstens 2000 Nm⁻² bei Zimmertemperatur steht.

5. Verfahren nach einem der Ansprüche 1 bis 4, bei dem
a1)vor Schritt a ein elektrisch leitend dotierter Bereich (2) an einer Oberseite eines Substrates (1) aus Halbleitermaterial und darüber die erste Schicht (3) oder Schichtfolge hergestellt werden,
a2)in Schritt a die zweite Schicht (5) oder Schichtfolge zumindest anteilig elektrisch leitend hergestellt wird und
e1)in Schritt e gleichzeitig Kontaktlöcher (8) für elektrische Kontaktierung der zweiten Schicht (5) und des dotierten Bereiches (2) hergestellt werden.

6. Verfahren nach einem der Ansprüche 1 bis 5, bei dem in Schritt a die zweite Schicht als Membranschicht für einen Absolutdrucksensor aufgebracht wird,
in Schritt b die Aussparungen (6) so angeordnet werden, daß mindestens eine dieser Aussparungen in einem Anteil der Membranschicht (5) vorhanden ist, der nicht zur Ausbildung einer Membran vorgesehen ist, und
in Schritt e eine Aussparung (11) gewählt wird, die sich in einem Anteil der Membranschicht (5) befindet, der nicht zur Ausbildung einer Membran vorgesehen ist.

7. Verfahren nach einem der Ansprüche 1 bis 5, bei dem die erste Schicht als Schichtfolge aufgebracht wird, die eine als Masseteil eines Beschleunigungssensors vorgesehene strukturierte Schicht enthält, und
Schritt c so ausgeführt wird, daß dieses Masseteil in dem Hohlraum freigeätzt wird.

## Claims

1. Process for producing a micromechanical sensor, having the following steps:
a) A second layer (5) or layer sequence is applied on a first layer (3) or layer sequence intended for the production of a cavity (4);
b) by means of a mask, holes (6) of a size designed for the subsequent steps c) and d) are made in the second layer (5) in the region of the projection, perpendicular to the layer plane, of the cavity (4) to be produced;
c) a cavity (4) is etched out in the first layer (3) or layer sequence by using these holes;
d) a sealing layer (7) is supplied on the second layer (5) in such a way as to close the holes without filling the cavity (4);
e) at least one of the holes (11) in the second layer is opened again at least enough to open the cavity; and
f) this hole (11) is re-closed using a material which is different from the material of the sealing layer (7), so as to seal the cavity.

2. Process according to Claim 1, characterized in that the sealing layer (7) is applied in step d using borophosphosilicate glass.

3. Process according to Claim 1 or 2, in which metal is sputtered and/or a dielectric (12) is deposited in step f.

4. Process according to one of Claims 1 to 3, in which step f is carried out in such a way that the gas thereafter enclosed in the cavity (4) is under a pressure of at most 2000 Nm⁻² at room temperature.

5. Process according to one of Claims 1 to 4, in which
a1) before step a, an electrically conductively doped region (2) is produced on an upper side of a semi conductor material substrate (1), and the first layer (3) or layer sequence is produced on top,
a2) in step a, the second layer (5) or layer sequence is produced so as to be at least to some extent electrically conductive, and
e1) in step e, contact holes (8) for electrical connection of the second layer (5) and of the doped region (2) are produced at the same time.

6. Process according to one of Claims 1 to 5, in which, in step a, the second layer is applied as a diaphragm layer for an absolute pressure sensor,
in step b, the holes (6) are arranged in such a way that at least one of these holes is present in a portion of the diaphragm layer (5) which is not provided to form a diaphragm, and
in step e, a hole (11) is selected which is located in a portion of the diaphragm layer (5) which is not provided to form a diaphragm.

7. Process according to one of Claims 1 to 5, in which the first layer is applied as a layer sequence which contains a structured layer intended as a mass part of an acceleration sensor, and
step c is carried out in such a way that this mass part is etched free in the cavity.

## Revendications

1. Procédé de fabrication d'un capteur micromécanique, qui comporte les étapes suivantes :
a) sur une première couche (3) ou une succession de couches, prévues pour la fabrication d'un espace vide (4), on applique une deuxième couche (5) ou une succession de couches;
b) au moyen d'un masque, on réalise des évidements (6) d'une taille dimensionnée en vue des étapes (c) et (d) ultérieures, dans la deuxième couche (5), dans la région de la projection verticale sur le plan des couches de l'espace vide (4) à réaliser;
c) en recourant à ces évidements, on grave un espace vide (4) dans la première couche (3) ou succession de couches;
d) une couche de fermeture (7) est appliquée sur la deuxième couche (5) de telle sorte que les évidements soient fermés sans que l'espace vide (4) soit rempli;
e) au moins l'un des évidements (11) dans la deuxième couche est ouvert au moins suffisamment pour que l'espace vide soit ouvert; et
f) cet évidement (11) est de nouveau fermé par un matériau qui est déposé à partir du matériau de la couche de fermeture (7), de telle sorte que l'espace vide soit fermé.

2. Procédé selon la revendication 1, dans lequel, dans l'étape d, la couche de fermeture (7) appliquée est en verre de silicate de bore et de phosphore (BPSG).

3. Procédé selon la revendication 1 ou 2, dans lequel, dans l'étape f, on réalise une pulvérisation de métal et/ou le dépôt d'un diélectrique (12).

4. Procédé selon l'une des revendications 1 à 3, dans lequel l'étape f est réalisée de telle sorte qu'un gaz ensuite enfermé dans l'espace vide (4) soit sous une pression d'au plus 2000 Nm⁻² à température ambiante.

5. Procédé selon l'une des revendications 1 à 4, dans lequel
a1) avant l'étape a, une zone dopée électriquement conductrice (2) est réalisée sur un côté supérieur d'un substrat (1) en matériau semiconducteur, et la première couche (3) ou succession de couches est réalisée par-dessus,
a2) dans l'étape a, la deuxième couche (5) ou succession de couches est réalisée de manière à être électriquement conductrice au moins dans certaines de ses parties, et
e1) dans l'étape e, on réalise en même temps les trous de contact (8) pour assurer le contact électrique de la deuxième couche (5) et de la région dopée (2).

6. Procédé selon l'une des revendications 1 à 5, dans lequel, dans l'étape a, la deuxième couche est appliquée en tant que couche de membrane pour un capteur de pression absolue,
dans l'étape b, les évidements (6) sont disposés de telle sorte qu'au moins l'un de ces évidements est prévu dans une partie de la couche de membrane (5) qui n'est pas prévue pour la réalisation d'une membrane, et
dans l'étape e, on sélectionne un évidement (11) qui se trouve dans une partie de la couche de membrane (5) qui n'est pas prévue pour la réalisation d'une membrane.

7. Procédé selon l'une des revendications 1 à 5, dans lequel la première couche est appliquée comme succession de couches qui contient une couche structurée prévue comme masselotte d'un capteur d'accélération, et
l'étape c est réalisée de telle sorte que cette masselotte située dans l'espace vide soit libérée par gravure.
